# EUROPEAN PATENT SPECIFICATION

(11) **EP 3 647 288 B1**
(45) Date of publication and mention of the grant of the patent: **26.06.2024**
(21) Application number: 19000497.8
(22) Date of filing: 04.11.2019
(51) Int. Cl.: C03C 17/25, C03C 17/27, C08K 3/00, C03C 17/00, C03C 23/00, C03C 17/02

(54) **PROCESS FOR TREATING A SUBSTRATE MADE OF GLASS OR OF A GLASSY SUBSTRATE BASED ON SIO2**
VERFAHREN ZUR BEHANDLUNG EINES SUBSTRATS AUS GLAS ODER EINES GLASARTIGEN SUBSTRATS AUF BASIS VON SIO2
PROCÉDÉ DE TRAITEMENT D'UN SUBSTRAT EN VERRE OU D'UN SUBSTRAT VITREUX À BASE DE SIO2

(43) Date of publication of application: 06.05.2020
(73) Proprietor: N-Tec GmbH, 84051 Essenbach Altheim (DE)
(72) Inventor: Interwies, Jan, 84028 Landshut (DE)
(74) Representative: Maiwald GmbH

(56) References cited:
- US-A- 4 476 156
- US-A- 5 730 771
- US-A- 6 054 227
- US-A1- 2016 068 431
- US-A1- 2018 105 457

## Description

The present invention relates to a method for treating a substrate made of glass or of a glassy substrate based on SiO₂, wherein the glassy substrate based on SiO₂ expressly includes corresponding coatings such as glazes, for example on ceramic substrates.

Methods for treating substrates of glass or glassy substrates are well known in the art, particularly in the field of plate glass and/or window glass. Here, the thermal hardening for the production of single-pane safety glass, abbreviated ESG in German, and the chemical hardening by molten salt and by ion exchange are widely used. Further fields are the functionalization of the surfaces of substrates made of glass or of glassy substrates. This is aimed at a change of surface properties, such as the imparting of photocatalytic properties by coating with TiO₂, or increasing the hydrophobicity for improved soil repellency or an increase in hydrophilicity for easier cleaning or washing. In addition, the problem of glass corrosion is already addressed in the prior art.

Commercially available products which are primarily directed to overcoming or reducing glass corrosion are, for example, available under the notation Luxclear^{®} from AGC, OptiShower^{®} from Pilkington. Timeless^{®} from Saint Gobain, ShowerGuard^{®} from Guardian and Clarvista^{®} from Vitro, formerly PPG.

For application of substances to a substrate surface to be treated or modified, various CVD methods and PVD methods, i.e. depositions from the gas phase, to the application of solutions or suspensions and subsequent, usually thermal post-treatment are employed. In the prior art, exclusively discrete layers or films are formed on the glass surface.

From US20080193638A1, for example, a method is known according to which films of ZrO₂ or TiO₂ can be prepared from a solution of corresponding alkoxides on various surfaces including glass, the disclosed pyrolysis temperatures generally ranging only to 550 °C. Final cleaning of the treated or modified surface can not be deduced from this document nor a possible reaction with the substrate while changing the structures in the latter.

Glasses having discrete coating films are also disclosed in US 4 476 156 A and US 5 730 771 A.

Overall, the methods known from the prior art have a number of disadvantages or can be improved in terms of the materials used, the process management and not least with regard to the direct process products. In particular, it is desirable to avoid the use of substances that are hazardous to health and/or the environment as far as possible, and to work as resource-efficient as possible, for example under as mild as possible process conditions and feasible efforts.

The object of the present invention is, therefore, to provide a process which overcomes at least part of the abovementioned disadvantages, thereby resulting in improved process products and being as environmentally friendly and economically viable as possible. Further object of the invention is to provide a process which is as broadly applicable as possible and flexible and versatile with respect to the substrates to be processed and the direct process products available with the process according to the invention.

The described object is achieved by a process for treating a substrate made of glass or a glassy substrate based on SiO₂ with the features of appended claim 1 or independent claim 2, wherein the glassy substrate based on SiO₂ expressly includes corresponding coatings such as glazes, for example on ceramic substrates or natural stone. Advantageous embodiments of this process are the subject of the dependent claims directly or indirectly referring to claims 1 and 2.

During the investigations made in connection with the present invention, it has surprisingly been found that it is already possible to process the SiO₂-containing substrates described above with the application of a single compound of Al, Zr and/or Ti, which is pyrolytically reactable at a temperature in the range of 600 °C to 950 °C, preferably 650 °C to 850 °C, with the substrate and subsequent pyrolysis to obtain advantageous product properties in the direct process product at the indicated temperature.

In the simplest case, a metal compound is completely dissolved in H₂O and acid by sufficient stirring, applied to the substrate to be treated and pyrolytically reacted at a temperature in the range of 600 °C to 950 °C, preferably 650 °C to 850 °C. This forms a fine, colourless layer on the surface with a transparent to milky appearance, which is removed after cooling to a temperature in the range of 200 °C to room temperature by simply polishing or washing the surface. The washing can simply be carried out with water or with the addition of common cleaning agents or detergents.

It is believed that due to the elevated temperatures during the pyrolytic reaction of the one or more pyrolytic compounds or compounds of the group comprising Al, Zr, and Ti at the indicated temperature, reaction with the substrate will occur and reaction products will accumulate on the surface, which are removable by the described, subsequent cleaning.

This purification step is of particular importance according to the invention, since these reaction products are difficult or impossible to remove completely after a certain ageing and have an adverse effect on the properties of the direct process product. For example, the transparency, surface smoothness, chemical resistance and scratch resistance suffer. Partly distinctively. In particular, when investigating scratch resistance it was found that a remaining of such reaction products, either in non-cleaned or poorly or not completely cleaned samples, in some cases led to significantly poorer test results in otherwise identically prepared samples.

According to an alternative, independent embodiment of the present invention, the substrate to be treated, in particular plate or float glass, is treated with a plasma torch and in the simplest case, a metal compound completely dissolved in H₂O and acid by sufficient stirring is then applied to the substrate to be treated. Subsequently, a further plasma treatment of the surface is carried out. The first treatment with a plasma torch thereby serves to clean the glass surface.

In this embodiment of the present invention, the applied treatment solution is not yet pyrolytically reacted by the subsequent treatment with a plasma torch but only fixed to the surface of the substrate.

In an alternative, independent embodiment of the process according to the invention, it is also possible to apply the treatment solution in the cooling phase on-line during float glass production. This eliminates both the pretreatment with the plasma torch, as well as the fixing, since the glass surface is highly pure at this stage of the production and the treatment solution is, depending on the selected temperature, either fixable or immediately pyrolytically reactable.

In cases in which no pyrolytic reaction takes place, a high quality intermediate product is obtained, which can be converted and cut at a later time and optionally in another factory, before it is subjected to a final heat treatment for pyrolytic reaction and, optionally and with appropriate temperature control, is subjected to a further processing to a single-pane safety glass, wherein the final process step then again is a cleaning by polishing or washing as described above.

Regardless of the chosen embodiment of the present invention, there are structural changes of the substrate, which according to initial results of EBSD-analyses are characterized by the presence of particularly hard, semi-crystalline or crystalline species in the substrate surface, these changes, comparable to a glass-ceramic, are visually not recognizable.

The random ESBD analyses point to complex silicate structures, some with solid, insoluble sodium inclusion, lithium and aluminosilicates, zirconium aluminates and silicates. Also, formation of mineral structures such as stishovite, diamond, and silicon carbide have been demonstrated, and this enumeration mentions only some of the species detected and is not exhaustive.

These results provide a good starting point for an explanation for the surprising advantages of the process according to the invention and of the corresponding process products, in particular the markedly greater hardness, which manifests itself in increased flexural tensile strength and improved scratch resistance, as well as the markedly reduced glass corrosion. The increased bending tensile strength achievable by the inventive process also provides structural advantages, since glass elements can be formed thinner than in the prior art with the same weight carrying or load capacity and lead to corresponding weight savings.

As already mentioned, the process product of the process according to the invention has altered properties, such as substantially greater hardness, greater chemical resistance or increased scratch resistance. Further advantages which can be achieved with the present invention are an increased resistance to glass corrosion and/or lower limescale or dirt adhesion.

As SiO₂-containing substrates in particular glass, glazes, glassy coatings are used in the present invention, i.e. accordingly glazed or coated ceramics or natural stones. It has to be emphasized as particularly surprising that the present invention allows the use of a treatment solution rather simple in its complexity in conjunction with a variety of different substrates, wherein the process is adaptable in many ways to requirements and at the same time easy and inexpensive to implement.

In this case, for example, a significantly greater surface hardness of the treated substrate has arisen when alone a pyrolytically reactable Al or Zr compound was applied and then reacted with the substrate in the specified temperature range. If a corresponding Ti compound is used, a substrate surface is obtained which is hydrophilic and photocatalytically active and has an increased surface hardness.

A combination of a Ti compound with a Zr compound results in a hydrophobic and photocatalytically active substrate surface, with hydrophobicity and/or photocatalytic activity depending on the concentrations and/or the amount of Ti and Zr.

Further advantages are obtained if at least one further metal and/or boron in the form of a compound which can pyrolytically be reacted with the substrate in the disclosed temperature range is applied to the surface of the substrate to be treated. Here, boron occupies a certain exceptional position in the context of the present invention, since this element can act as a melt phase former on the one hand because it reduces the melting or softening temperature of the substrate on the surface. On the other hand, this is true, although not mandatory, in particular in combination with other compounds used in the context of the present invention, because it can also function as a network former and is incorporated into the surface structure of the substrate. As a result, particularly smooth surfaces are obtained, which are usually also particularly resistant to chemicals and water and show less limescale adhesion. Glass corrosion is also positively affected by the addition of boron to the treatment solution, i.e. the process product has a reduced susceptibility to glass corrosion.

In particular and independent embodiments of the process according to the invention, it is therefore preferred if the at least one further metal is selected from the group of melt phase formers and/or the group of network formers or functionalizers.

In this case, it is again preferred that the group of the melt phase formers comprises Li, K, Cu, Zn and Sn and the group of network formers or functionalizers comprises B, Ti, V, Fe, Cu, Ge, Ag, In, Sn, W, Pt, Au, Mo and Pb, wherein the classification into melt phase former and network former or functionalizer is to a limited extent an arbitrary classification, since different metals have both properties and lower both the melting or softening point, as well as causing structural changes of the substrate by reacting with the SiOₓ units of the substrate.

In this context, it should be noted that the combination in groups is for convenience only and is an independent disclosure for each of the named metals, as well as each individual possibility of combining them, irrespective of the group in which the corresponding metal is cited.

Subsequently some examples of the effect of certain metals are indicated, wherein it is understood that the metals are named as elements, but in the context of the present invention are generally used in the form of one or more of their pyrolytically reactable compounds.

As an example of this lithium is to be cited, which, in combination with one or more other metals, or their compounds which can be reacted pyrolytically in the context of the present invention, respectively, leads to a significant lowering of the melting point or softening point, but at the same time is capable of forming ceramic or glass-ceramic structures, including glass ceramics. This applies in particular in combination with the Al and/or Zr compounds used. The same applies to combinations of Zn with Al or Mg with Al, wherein said combinations result in lowering of the melting and softening point and also in greater surface hardness and greater surface smoothness in the direct process product.

The lowering of the melting or softening point is a characteristic that basically all of the melt phase formers show. In addition, for example, lithium and potassium increase the surface hardness of the treated substrate, while copper, zinc and tin impart improved antibacterial, antiviral, algicidal, fungicidal, or generally anti-microbiological properties to the treated substrate.

Depending on the selected composition or combination, however, other or further properties of the substrate can also be influenced and modified.

For the network builders or functionalizers, the situation is somewhat different than for the melt phase formers, all of which at least lower the melting or softening point. Depending on the selected metal or selected combination of metals, some quite different property changes result, of which some of these properties or property changes are described below.

Titanium leads, as already mentioned, to a number of possible property changes. It increases the hardness of the substrate, can activate it photocatalytically and/or, depending on the chosen combination, make the surface hydrophilic or hydrophobic. Use of vanadium at least partially reduces the transmittance of the substrate to UV rays, while iron is used mainly because of its colouring effect.

Addition of germanium, for example, can improve the transmission in the infrared range, while the addition of silver can have a colouring effect and/or improves the antibacterial properties of the surface of the substrate.

Indium leads to increased heat reflection and tungsten has a yellowing or browning effect, platinum has a strong antibacterial effect and lead changes the refractive index of the substrate, the latter also showing an antibacterial effect.

Also of particular advantage is the great variability of the present invention in terms of properties or property changes in the process products directly obtainable by the process according to the invention. By combining various metals in the treatment solution, properties such as hardness, smoothness of the surface, surface properties such as hydrophobicity or hydrophilicity, required temperature of the heat treatment, photocatalytic activity, breaking strength, flexural strength, chemical resistance, limescale adhesion, glass corrosion, scratch resistance, heat reflection, thermal conductivity, antimicrobial, In particular, antibacterial, antifungal and/or antiviral behaviour can be influenced in a desired and predetermined manner. This is especially true if the composition of the substrate used is taken into account and the composition of the treatment solution is adapted to the substrate, wherein it is assumed that it is particularly advantageous in this context if the substrate and treatment solution are matched with one another in such a way that local areas are formed having compositions of ceramic character or correspond to a glass ceramic.

It has been shown that in particular combinations of Al and Li, Zr and Li, Al, Zr and Li, Al, Zr and Sn or Zn are particularly advantageous and lead to products that have a particularly high surface hardness, low limescale adhesion and increased chemical resistance. This is attributed to the formation of glass ceramic structures in the substrate.

With the process according to the invention, in particular different types of glasses or generally substrates are, therefore, available which have an improved hardness, in particular surface hardness, and can be used in a wide variety of fields. Particularly worth mentioning is plate glass, which can for example be used or further processed as facade cladding, insulating glass, glass roofing for conservatories and greenhouses, shower cabins, vehicle glass for cars and trucks, trains, as furniture glass, in shop and exhibition construction and for solar systems. Other areas include engineering glasses, optical glasses, spectacle lenses, utility glasses such as drinking glasses, chopping boards and bottles, especially refillable and disposable bottles, watch glasses, glasses for electronic device displays, computer and glass screens and kitchen worktops.

It is also expressly emphasized that the present invention is not limited to glass as a substrate. Glazes and glassy coatings, i.e. correspondingly glazed or coated ceramics or natural stones with a corresponding proportion of SiO₂ at the surface, can be used as a substrate in the process according to the invention. Examples of process products obtainable according to the invention are, for example, kitchen worktops with increased fracture and cut or scratch resistance and thermal shock resistance, floor and wall tiles for indoor and outdoor use with antimicrobial, photocatalytic, dirt-repellent and/or heat-reflecting properties and increased scratch resistance and chemical resistance. Glazed sanitary ceramics also fall within this category, since, in general, for example, surfaces are also available which have improved glaze smoothing properties, corrosion minimization and limescale adhesion.

It is believed that the achievable changes in substrate properties are dependent on whether the at least one metal under the selected process conditions substantially remains at the surface of the substrate and reacts or diffuses into the substrate to some extent. The difference in the penetration depth in the process according to the invention ranges from the nanometer range with purely superficial changes to a range of several tens of micrometers or greater with deeper changes in the substrate properties. In principle, this also depends on the structure and composition of the substrate, on the amount of the coating and on the metal cations used. It can be seen that particularly advantageous property changes are obtained in the substrate when the composition of the substrate and the treatment solution complement each other at least qualitatively to enable the formation of compositions which are the same or at least similar to those of known glass ceramics or ceramics. Also, unlike many embodiments described in the prior art for improving or modifying glass surfaces, no discrete additional layers are formed on the surface by the method of the invention. According to the invention, there is a gradual change in the upper regions of the substrate to which the treatment solution has been applied.

As a result, it has to be noted that particularly advantageous embodiments of the invention result when the composition of the treatment solution is chosen to be complementary to the composition of the respective substrate from the viewpoint of forming glass-ceramics, glass-ceramic or ceramic structures or, in other words, when substrate and treatment solution, upon consideration of the cations contained, complement at least qualitatively to the effect that a formation of glass-ceramic or ceramic structures or substructures is made possible.

The present invention will be explained in more detail below with reference to the attached Figures 1 to 5 in comparison with the prior art. It is shown:
**FIG.1** shows an electron micrograph of an Optishower^{®} glass in cross section,
**FIG. 2** shows an electron micrograph of a commercially available single-pane safety glass in cross section,
**FIG. 3** shows an electron micrograph of a single-pane safety glass treated according to the method according to the invention in cross section,
**FIG. 4** is an electron micrograph of a commercially available, untreated float glass in cross-section and
**FIG. 5** is an electron micrograph of a commercially available float glass after performing the inventive method in cross section.

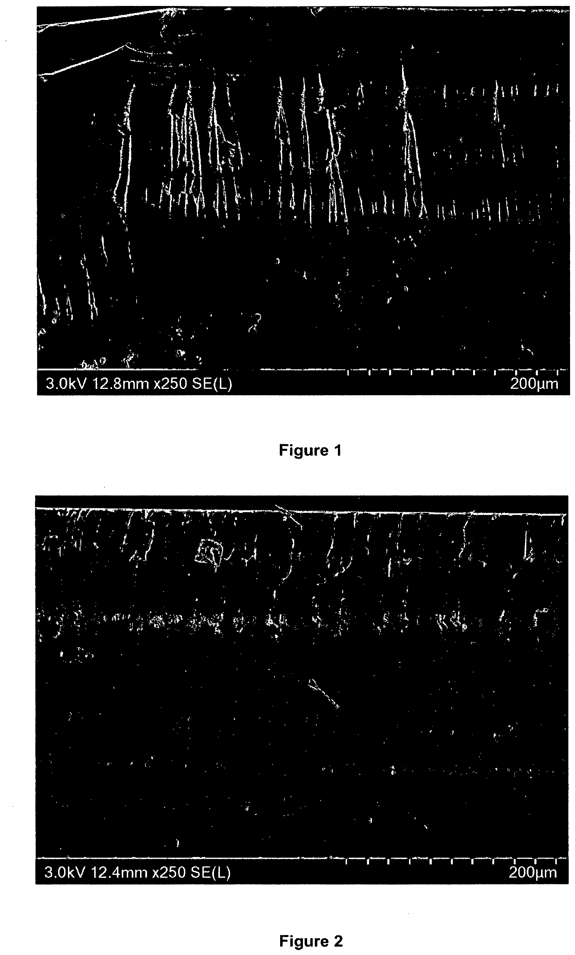

The electron micrograph of an Optishower^{®} glass from Pilkington, represented in **FIG. 1****,** clearly shows a plurality of discrete layers applied to the glass substrate at the top of the image. The vertical lines in the upper half of the picture are stress lines that may be caused by an increased compressive stress. The essential feature of this glass is the formation of phase boundaries that make the individual layers recognizable.

In the electron micrograph represented in **FIG. 2** of a commercially available single-pane safety glass the vertical stress lines that arise due to the thermal toughening of the glass are clearly visible.

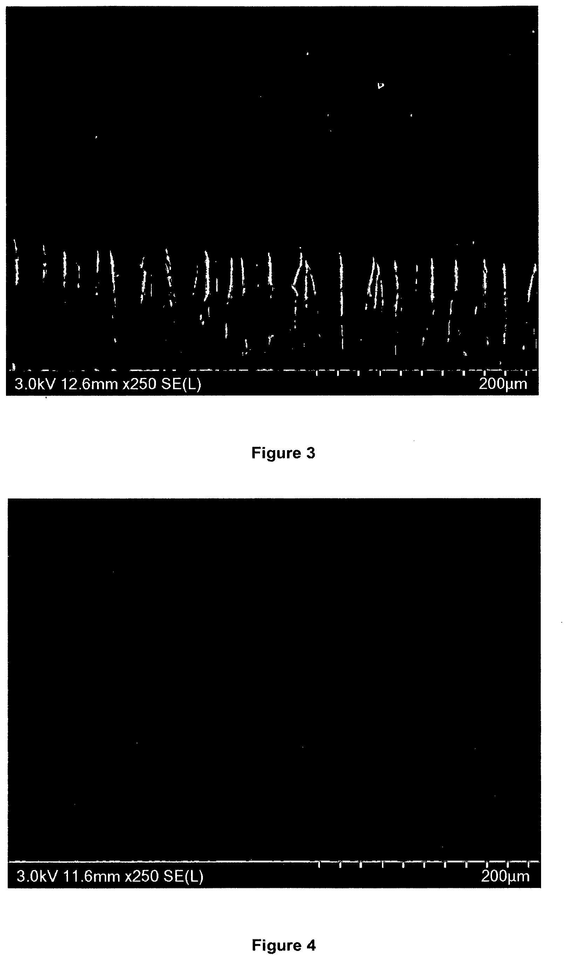

The result of applying the method according to the invention to the single-pane safety glass in **FIG. 2** is shown in **FIG.** 3. Here it can clearly be seen that the vertical stress lines are formed both from below and in the upper region of the figure. Furthermore, the non-recognitzability of phase boundaries is remarkable, which is considered evidence of infiltration or diffusion of the reactive components of the treatment solution into the glass and their complete integration. Such improved single-pane safety glass has an increased flexural strength which is about 20 to 40% higher than that of non-improved single-pane safety glass and a significantly higher edge impact resistance. The latter shows in comparison to the single-pane safety glass in that an single-pane safety glass at a blow on the edge bursts into a mass of small pieces while an improved single-pane safety glass according to the invention is more prone to flaking off small fragments, without immediately completely bursting into pieces.

This results, among other advantages, initially in a much improved handling of an improved single-pane safety glass, since it also tolerates a harder placement due to the lower tendency to breakage. A situation that frequently occurs during installation.

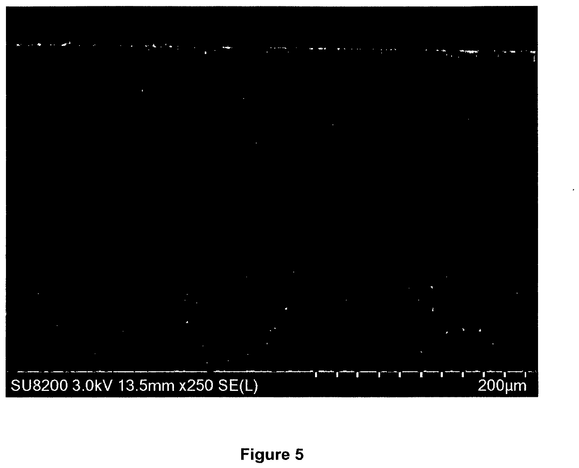

The electron micrograph of the commercially available, untreated float glass in **FIG. 4** shows the completely homogeneous structure of this glass without stress lines and without phase boundaries, whereas FIG. 5, which shows a float glass of FIG. 4 treated according to the process of the invention, shows small, vertical stress lines without forming a phase boundary at the upper edge the glass. Also in this case, the absence of a recognizable phase boundary is evidence of the incorporation and integration of the reactive constituents of the treatment solution used according to the invention.

The treatment solution used in the process according to the invention for **FIGS. 3** and **5** is that of exemplary embodiment 32.

Overall, in the figures relating to the present invention, the absence of discrete layers and phase boundaries is conspicuous and shows the homogeneous integration of the reactive constituents of the treatment solution used, so that in principle other circumstances emanate than in glasses of the prior art.

To further explain the invention and to improve its understanding the same is described in detail below and with reference to specific embodiments.

First, a treatment solution is prepared by completely dissolving a metal compound. In principle, any type of metal compound may be used in which the metal is capable of the desired change in properties of the substrate. Also, combinations of metal compounds can be used to obtain e.g. corresponding property changes of one or more properties or reduce the required temperature of the heat treatment.

In the investigations carried out in the context of the work on the present invention, it has been found that soluble metal compounds are particularly preferred metal compounds. In the scope of the present invention, barium sulfate would be rather unsuitable due to its virtually non-existent solubility in water, while aluminium sulfate may be used as a metal compound. Both can be used, purely inorganic compounds, usually salts, as well as metal compounds with organic moieties.

The use of undissolved compounds, for example in the form of a dispersion or suspension is, although not excluded, not preferred in the context of the present invention, since this easily leads to surface defects and also to impairment of properties such as transparency, surface hardness and scratch resistance, but also of the chemical resistance.

As metal compounds having organic moieties, metal alkoxides can generally be used in the process according to the invention, wherein metal alkoxides having an organic moiety having one to four carbon atoms being particularly advantageous, i.e. the methyl, ethyl, propyl and butyl oxides, of which all isomeric forms of the propyl and butoxy oxides, i.e. the isopropyloxides, n-butyloxides, sec- and tert-butyloxides of the metals are preferred. More preferred are the ethyl and propyloxides, and most preferred are the isopropyloxides and n-propoxides of the metals, since these are generally well manageable, inexpensive and obtainable in high purity.

The use of the abovementioned alkoxides in the process according to the invention is advantageous in terms of process procedure, since alcohol is formed during the preparation of the treatment solution by the resulting hydrolysis, which is sufficiently volatile and volatilizes without leaving any residue.

In principle, all metal compounds that are sufficiently soluble in aqueous systems have to be mentioned as purely inorganic metal compounds. In this context, preference is given to oxide, hydroxide, oxyhydroxide, hydrated oxide, sulfate, nitrate and/or chloride and, in individual cases, phosphate. This is already the case because of their good availability.

The use of the singular form in this enumeration is to be understood as referring only to the substance class as such and includes the plural, such as in the presence of multiple oxides.

Furthermore, the use of the above-mentioned, inorganic metal compounds preferably used is particularly advantageous because the dissolution thereof is usually carried out at a pH <7 and the acids corresponding to said anions are usable without increasing the number of different species present in the treating solution. The same applies to alcohols, wherein C₁-C₄ alcohols can also be used to prepare the treatment solution and e.g. be used quite advantageously with the use of appropriate metal alkoxides, since with them corresponding metal alkoxides are very easy to bring into solution.

Generally it is preferred to adjust the pH of the treatment solution to a range of 0 to 5, more preferably to a pH of 0 to 3.

For the inventive process the simplest possible composition of the treatment solution from as few components and/or constituents as possible is of particular importance, because such simply constructed systems are simple or easier to handle and have fewer sources of impurities which would adversely affect the direct process product. Furthermore, it is possible within the scope of the present invention, i.e. apart from some metal compounds, to dispense with particularly health and/or environmentally hazardous substances that are widely used in the art, for example, for stabilizing metal cations.

To adjust the pH of the treatment solution, but also to assist in dissolving the metal compound used, commercially available inorganic or organic acids are usable, preferably nitric acid, sulfuric acid, hydrochloric acid, phosphoric acid, formic acid, acetic acid or propionic acid. Here it has been shown that in particular hydrochloric acid, nitric acid and sulfuric acid are advantageous. Other acids are basically also usable, e.g. acetic acid, phosphoric acid or formic acid but usually result in process products with limited advantages compared to those obtained using the other acids mentioned.

It is therefore preferred in a particular, independent embodiment of the process according to the invention, when the treatment solution, apart from at least one dissolved metal, exclusively contains H₂O and alcohol, sulfate, nitrate and/or chloride ions.

This treatment solution is stable for a long time, i.e. it has a shelf life of several weeks to several months.

As mentioned above, glass, glazes and glass-like coatings, i.e. correspondingly glazed or coated ceramics or natural stones are in principle considered for the inventive process, wherein it is assumed that the inventively achieved changes in the properties, in particular improvements in hardness, scratch resistance, surface smoothness, surface density and the reduction of limescale adhesion and glass corrosion by the procedural changes are achieved on an atomic or molecular level.

The substrate to be treated in the process of the invention is selected from glass, glazes and glassy coatings, i.e. correspondingly glazed or coated ceramics or natural stones, and is, in an independent, advantageous embodiment, washed in a first, preparatory process step and dried or subjected to a treatment with a plasma torch. This washing can also be carried out with water or with the addition of common cleaning agents or detergents. This removes any adhering contaminants and at least minimizes, if not completely eliminates, the formation of imperfections or local defects on the surface of the final product. Decisive is a clean surface of the substrate, because in this way imperfections and/or defects can be avoided.

Purification of the substrate prior to application of the treatment solution may generally be omitted if the same is highly pure, such as plate or float glass directly during manufacture. I.e. when the application of the treatment solution in an on-line process is integrated into the manufacturing process.

The subsequent application of the treatment solution can basically be done by decanting, pouring, flooding, rolling, dipping, spin-coating and similar methods, but in the scope of the invention, the application is done by spraying or steam atomization , because in this way a particularly uniform application occurs and, in particular, a volatilization of the volatile constituents contained in the treatment solution, including the water, takes place, as a result of which a completely or almost completely dry coating remains on the substrate. The use of gas-phase deposition methods, ranging from simple evaporation of a treatment solution in a substrate-loaded furnace to more complex CVD or PVD processes, would also possible without limitation in the context of the present invention generally, however, require a higher process engineering effort and are therefore not preferred and not claimed.

The application by spraying is done with conventional spraying means, such as spray heads or spray guns, wherein a fine, homogeneous spray mist as possible is employed.

In steam spraying, superheated steam is used instead of air as atomizing agent, as a result of which at least a tendency for finer atomization and thus also a finer and more uniform application can be achieved. Furthermore, the steam atomization also facilitates the removal of the volatile components of the treatment solution. Overall, an even finer distribution and thus an even more uniform coating of the substrate is achieved by the steam atomizing compared to the spraying with air as a atomization agent.

The application of the treatment solution is generally carried out depending on the chosen application technique and concentration of the treatment solution in an amount of 0.1 to 200 g/m² and by spraying or steam atomization, ideally by cross coating, wherein the atomization pressure generally lies between 3 bar and 12 bar, in a preferred embodiment ≥ 5 bar, but in is principle freely selectable and adaptable.

The thus-coated and dry or almost completely dry substrate is then subjected to a heat treatment by being heated to a temperature of 600 °C, preferably 650 °C to 950 °C, and held at this temperature for a period of 0.5 to 10 minutes. In this case, the temperature to be selected is closely related to the substrate and should be at least near the glass transition temperature or near the softening point, wherein the temperature may significantly be lowered by adding melt phase formers or fluxes, e.g. LiCl, ZnCl₂ or SnCl₂.

The duration of the heat treatment basically depends on the thickness of the substrate and is usually chosen to be longer, the thicker the substrate is.

After the heat treatment, cooling of the substrate to a temperature in the range of 200 °C to room temperature, preferably from 120 °C to 70 °C is carried out, since after the heat treatment a layer of reaction products remains on the surface, which is easily removable in the specified temperature range by polishing with a cloth or a polishing pad or by the washing as described.

If the cloudy layer ages for an extended period of time before polishing or washing, it is often hardly, insufficiently or incompletely removable and has a negative effect on properties such as scratch resistance, transparency, chemical resistance or limescale adhesion. These properties deteriorate in their entirety or individually clearly, compared to substrates which have been washed or polished in the specified temperature range and in a timely manner.

The cleaning of the adhering surface reaction products can be accomplished after complete cooling of the substrate, i.e. at a later time and be facilitated by re-heating the surface.

This heat treatment can be done on the one hand by the warming up of the surface, as well as by selective heat input during the polishing process.

The final step of the purification and thereby removal of the reaction products is therefore essential with respect to the product properties achievable in the process.

in the following examples, all percentages are percentages by weight unless expressly stated otherwise. The listed times are indicative, depending in each case on the prevailing conditions and the materials used and thus may vary.

### Example 1: Preparation of an aluminium-containing treatment solution based on aluminium isopropoxide

10 kg of nitric acid containing 65% HNO₃ are added to 80 kg of H₂O and stirred for 10 minutes. Subsequently, 10 kg of aluminium isopropoxide, purity 98%, are slowly added and stirred until completely dissolved. For complete dissolution it is necessary to agitate for at least 2 hours, it also being possible or necessary to stir much longer, for example for 3, 4, 5, 24 or 48 hours. This treatment solution can be used as such in the process according to the invention, but can also be used in combination or as a mixture with one or more other treatment solution or treatment solutions. It has a shelf life of at least three months.

### Example 2: Preparation of a zirconium-containing treatment solution based on zirconium isopropoxide

To a mixture of 2.5 kg of HCl containing 37% HCl and 54.65 kg of isopropanol 11.01 kg of zirconium isopropoxide are added slowly and with stirring and further 132.5 kg of nitric acid containing 1% HNOs are added. Stirring is continued until complete dissolution of the zirconium isopropoxide, i.e. for a period of time as indicated in Example 1. The resulting solution of zirconium isopropoxide may be used as such, but also in combination with one or more other treatment solutions. It has a shelf life of at least three months.

### Example 3: Preparation of a boron-containing treatment solution

0.5 kg of triisopropyl borate are added to 9.5 kg of ethanol and it is stirred for 2 to 5 hours. The alcoholic solution obtained can be used directly and on its own, but also in a mixture with solutions of other metal cations.

### Example 4: Preparation of a zirconium and aluminium containing treatment solution

To 9 kg of the zirconium-containing treatment solution obtained in Example 2 1 kg of the treatment solution obtained in Example 1 is added, and the mixture is stirred for 2 hours. Then, 0.2 kg of zinc chloride is slowly added with stirring and stirring is continued for a period of 2 to 48 hours. The treatment solution thus obtained can be used directly, but also has a shelf life of at least three months.

The treatment solutions prepared according to Examples 1 to 4 can be used as they are and already provide good results. However, it is preferred to add further metal compounds to these solutions in order to reduce the softening temperature, for example by adding melt phase formers. The addition of further metal compounds such as CuCl₂, SnCl₂, ZnCl₂ and LiCI is generally carried out as solids and with stirring until completely dissolved. Other compounds such as boric acid or AgNO₃ are added in the form of commercially available solutions. Overall, the commercially available and most cost-effective form of the compound to be added is usually used.

The table below gives the composition of a number of embodiments of treatment solutions which were prepared in the context of the present invention and led to improved properties in the process product compared to the starting substrate, at least with respect to limescale adhesion and/or hydrophobicity:

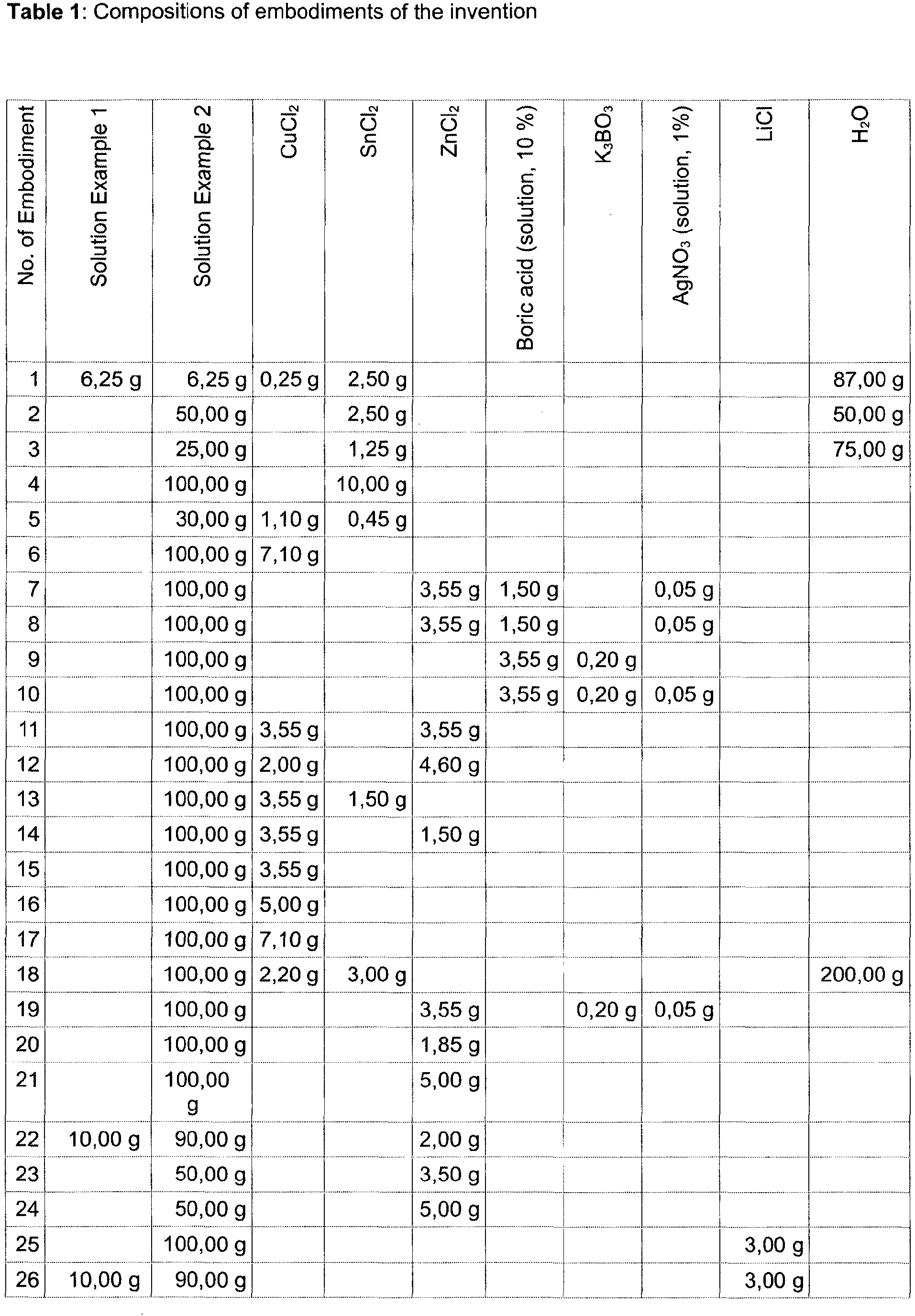

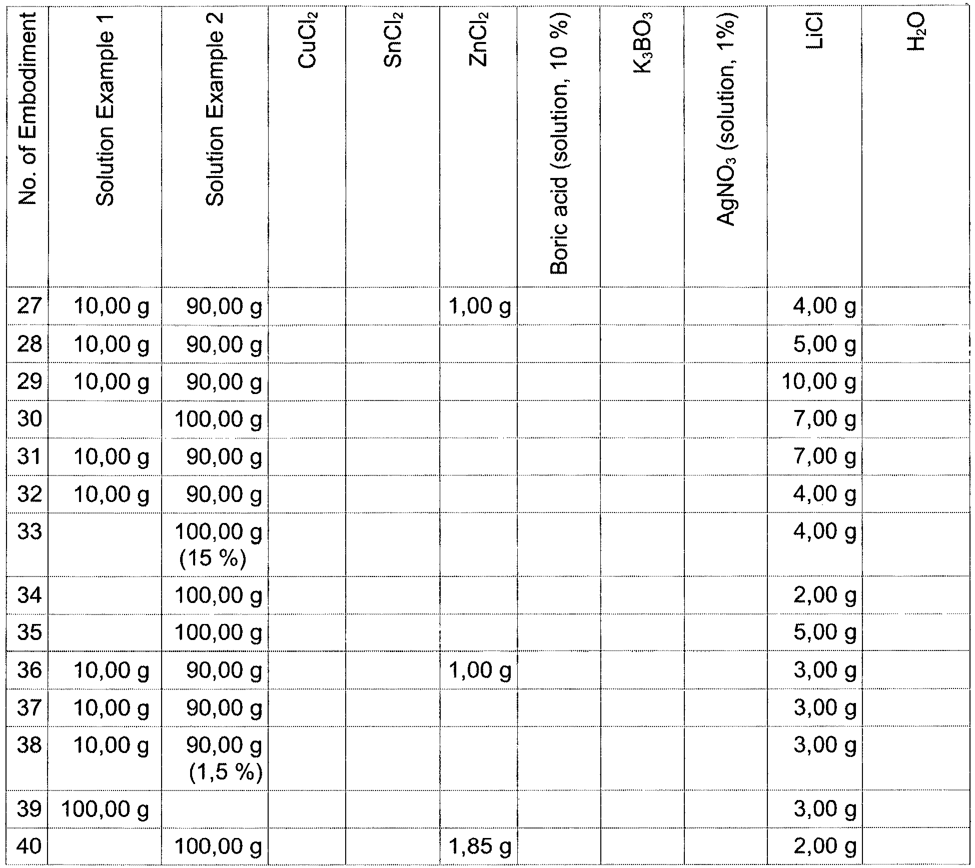

### Comparative tests

For evaluating the present invention in terms of scratch resistance and glass corrosion resistance, samples of untreated glass, single-pane safety glass made of such a glass, and glass modified in accordance with the present invention were each subjected to a spray test and a scratch resistance test. The examined glass plates had a size of 200 mm x 300 mm.

The untreated glass, which serves as a reference sample, is at the same time the starting material for the single-pane safety glass, which was likewise tested for comparison, and the starting substrate for the surface treatment according to the invention, individual samples being produced separately.

The untreated glass, which is the starting material for the single-pane safety glass which has also been investigated, and the starting substrate for the surface treatment according to the invention, is a commercially available soda-lime glass.

In these tests, in addition to the listed comparisons, the influence of the pretreatment and the parameters for application of the treatment solution was also investigated. Details of the conditions are given in the evaluation of the respective investigation.

### Investigation of scratch resistance

These tests were carried out on a device called Erichsen Model 639 with tungsten carbide needle with an adjustable force of 2 N to 40 N over an impact distance of 50 mm to 100 mm.

For the examination, the glass plate is inserted into the device and the tungsten carbide needle is guided over the sample with a defined force over a distance between 50 mm and 100 mm. After removal of the sample from the device, the evaluation was carried out on the one hand purely visually with the naked eye and on the other hand with a digital microscope.

In the purely visual evaluation, the tested area is marked and cleaned with a microfibre cloth. Scratches are then made observeable with steam or breath. Once a scratch, i.e. a change in the glass surface is recognizable, the force is noted under which the scratch is created. This value is listed in the table below under the column labeled 'water vapour rating'.

During the evaluation with the digital microscope, the tested area is marked and cleaned with a microfibre cloth just as in the purely visual evaluation. The tested glass is then placed on a dark background, such as a dark cast stone. Under the microscope, the marked scribe lines are evaluated and, as before, the force at which a scratch under the digital microscope becomes visible is noted.

As a result, scratch marks are more difficult to detect using a digital microscope than visually with the naked eye, which is why the values determined with a digital microscope are generally higher. This is related to the resolution and refraction.

**Table 2: Scratch resistance**

| **No.** | **Sample** | **Water vapour rating** | **Digital microscope** | **Remark** |
|---|---|---|---|---|
| 1 | untreted glass (reference) | 4 N | 6 N | scratch noise as of 6 N |
| 2 | hardened Glas (spsg, reference) | 6 N | 10 N | scratch noise as of 10 N |
| 3 | embodiment 32 (3 x 0,3 mm nozzle) | 20 N | 30 N | |
| 4 | embodiment 32 (3 x 0,3 mm nozzle) | 20 N | - | 40 N without scratches |
| 5 | embodiment 32 (1 x 0,3 mm nozzle) | 20 N | - | 40 N without scratches |
| 6 | embodiment 32 (1 x 0,3 mm nozzle) | 20 N | 40 N | |
| 7 | embodiment 20 (3 x 0,3 mm nozzle) | 10 N | 32 N | |
| 8 | embodiment 32 | | 40 N | |
| 9 | embodiment 32 | | 22 N | |
| 10 | embodiment 32 | | 40 N | |
| 11 | embodiment 32 | | 40 N | |
| 12 | embodiment 32 | | 36 N | |
| 13 | embodiment 20 (3 x 0,3 mm nozzle) | | 40 N | |
| 14 | embodiment 20 (3 x) | | 40 N | |
| 15 | embodiment 32 (3 x 0,3 mm nozzle) | | 40 N | |
| 16 | embodiment 32 (3 x 0,3 mm nozzle) | | 40 N | |
| 17 | embodiment 40 (3 x 0,3 mm Düse | | 40 N | |

### Evaluation:

In tests Nos. 4, 5 and 15, the application of the treatment solution was carried out by means of a spray gun by hand, while in the other cases the application was carried out with a spraying device. Incidentally, Tests Nos. 1 to 7 were carried out on respective samples immediately after the cleaning after heat treatment, while Tests Nos. 9 to 20 were carried out on samples previously subjected to the spray test described below.

Unless otherwise stated, the nozzle diameter was 0.5 mm, and in Tests Nos. 8 to 12, the deposition was carried out by steam atomization.

The following deviating parameters have been set:
No. 8: Feed 1000 mm/s,
No. 9: Feed 700 mm/s, pre-cleaning with plasma torch
No. 10: Feed rate 400 mm/s, pre-cleaning with plasma torch
No. 11: Feed rate 400 mm/s, pre-cleaning with plasma torch
No. 12: Feed 700 mm/s
No. 13: Feed 400 mm/s

As a result, it can be noted that the process product is variable in scratch resistance not only depending on the composition of the treatment solution, but also depending on the selected application parameters. In principle, however, the process according to the invention leads to process products having a marked increase in scratch resistance compared with the starting substrate.

### Examination in the spray test

The test by means of a spray test and in accordance with the standard EN ISO 9227:2007 (formerly DIN 50021) serves to determine the glass corrosion, in which turbidity occurs by dissolving or leaching of soluble constituents of the glass, essentially sodium, and the resulting haze being determined by haze test.

In this test, the samples are placed at an angle of 20 ° (± 10 °) in a spray chamber. In case of the artificial atmosphere created in the chamber, the temperature in the chamber is 35 °C and the air is constantly humidified with demineralized water. The samples are sprayed at a spray pressure of 1 bar with tap water at a flow rate of 700 ml to 800 ml per hour for 72 hours, dried and cleaned to prevent limescale adhesion. Subsequently, the glass plates are measured with a transmittance hazemetre using two illuminants (light source A and light source C).

The determined Haze value is given in % and describes the scattering of the light. The lower the value, the less the scattering and thus the glass corrosion.

**Table 3: Spray test (the numbers given in the "Sample" column correspond to the numbering in Table 2)**

| **Sample** | **Haze in % light source A initial value t₀** | **Haze in % light source A after 72 h** | **Haze in % light source C initial value t₀** | **Haze in % light source C after 72 h** |
|---|---|---|---|---|
| 1 | 0,00 | 6,35 | 0,06 | 5,15 |
| 2 | 0,01 | 4,00 | 0,04 | 4,23 |
| 8 | 0,03 | 1,86 | 0,03 | 2,34 |
| 9 | 0,04 | 0,14 | 0,06 | 0,14 |
| 10 | 0,04 | 0,15 | 0,09 | 0,22 |
| 11 | 0,02 | 0,04 | 0,07 | 0,19 |
| 12 | 0,03 | 2,36 | 0,07 | 2,46 |
| 13 | 0,04 | 0,10 | 0,19 | 0,23 |
| 14 | 0,03 | 0,20 | 0,04 | 0,38 |
| 15 | 0,02 | 0,05 | 0,03 | 0,10 |
| 16 | 0,07 | 0,26 | 0,10 | 0,36 |
| 17 | 0,07 | 0,15 | 0,10 | 0,23 |

The result is clearly an extreme improvement, i.e. reduction of glass corrosion of the glass treated in accordance with the invention compared to untreated glass.

Finally, it has to be noted that glass treated by the process according to the invention and single-pane safety glass produced therefrom each have an approximately 30% higher tensile/flexural strength than untreated glass or untreated single-pane safety glass.

In summary, therefore, extremely surprising changes in properties occur in comparison with the untreated starting substrate.

## Claims

1. A process for treating a substrate made of glass or of a glassy substrate based on SiO₂, comprising the following process steps:
a) applying a treatment solution containing one or more compound or compounds of the group comprising Al, Zr, and Ti, which are pyrolytically reactable at a temperature in the range of 600 °C to 950 °C, to the surface of the substrate to be treated and pyrolytic reaction thereof at the specified temperature, and
b) cooling the treated substrate to a temperature in the range of 200 °C to room temperature, **characterized by**
c) cleaning the substrate by polishing or washing the surface, and
in that the treatment solution is applied with a concentration in an amount of 0.1 to 200 g/m² by spraying or steam atomization and no discrete additional layers are formed on the surface of the treated substrate.

2. A process of treating a substrate of glass or of a glassy substrate based on SiO₂, comprising the following process steps:
a) applying a treatment solution containing one or more compound or compounds of the group comprising Al, Zr, and Ti, which are pyrolytically reactable at a temperature in the range of 600 °C to 950 °C, to the surface of the substrate to be treated, and
b) post-treatment of the substrate surface with a plasma torch and
c) heat treatment at a temperature in the range of 600 ° C to 950 °C at a later time,
d) cooling the treated substrate to a temperature in the range of 200 °C to room temperature and
e) cleaning the substrate by polishing or washing the surface,
wherein the treatment solution is applied with a concentration in an amount of 0.1 to 200 g/m² by spraying or steam atomization and no discrete additional layers are formed on the surface of the treated substrate.

3. The process according to any one of claims 1 or 2,
**characterized in that**
the substrate is cleaned by washing or treating with a plasma torch prior to application of the one or more compound or compounds capable of being reacted pyrolytically with the substrate.

4. The process according to any one of claims 1 to 3,
**characterized in that**
at least one further metal and/or boron is applied to the surface of the substrate to be treated in the form of a compound which can be reacted pyrolytically with the substrate in the specified temperature range.

5. The process according to any one of the preceding claims,
**characterized in that**
the at least one further metal is selected from the group of melt phase formers and/or the group of network formers or functionalizers.

6. The process according to claim 5,
**characterized in that**
the group of melt phase formers comprises Li, K, Cu, Zn and Sn and the group of network formers or functionalizers comprises Ti, V, Fe, Cu, Ge, Ag, In, Sn, W, Pt and Pb.

7. The process according to any one of the preceding claims,
**characterized in that**
the substrate is plate or float glass.

8. The process according to any one of the preceding claims,
**characterized in that**
the application takes place on-line in the manufacturing process, when the plate or float glass has cooled sufficiently.

9. The method according to any of claims 1 to 8,
**characterized in that**
the heat treatment is followed by a rapid cooling to produce a single-pane safety glass or the production of a laminated safety glass.

10. Plate or float glass, obtainable by a process according to any one of the preceding claims, wherein no discrete additional layers are formed on the surface of the treated substrate.

## Patentansprüche

1. Verfahren zur Behandlung eines Substrats aus Glas oder eines glasartigen Substrats auf der Basis von SiO₂, umfassend die folgenden Verfahrensschritte:
a) Aufbringen einer Behandlungslösung, die eine Verbindung oder mehrere Verbindungen aus der Gruppe, umfassend Al, Zr und Ti, enthält, die bei einer Temperatur im Bereich von 600 °C bis 950 °C pyrolytisch reaktiv ist/sind, auf die Oberfläche des zu behandelnden Substrats und pyrolytische Umsetzung derselben bei der angegebenen Temperatur, und
b) Abkühlen des behandelten Substrats auf eine Temperatur im Bereich von 200 °C bis Raumtemperatur,
**gekennzeichnet durch**
c) Reinigen des Substrats durch Polieren oder Waschen der Oberfläche und
**dadurch, dass** die Behandlungslösung mit einer Konzentration in einer Menge von 0,1 bis 200 g/m² durch Sprühen oder Dampfzerstäubung aufgetragen wird und keine diskreten zusätzlichen Schichten auf der Oberfläche des behandelten Substrats gebildet werden.

2. Verfahren zur Behandlung eines Substrats aus Glas oder eines glasartigen Substrats auf der Basis von SiO₂, umfassend die folgenden Verfahrensschritte:
a) Aufbringen einer Behandlungslösung, die eine Verbindung oder mehrere Verbindungen aus der Gruppe, umfassend Al, Zr und Ti, enthält, die bei einer Temperatur im Bereich von 600 °C bis 950 °C pyrolytisch reaktiv ist/sind, auf die Oberfläche des zu behandelnden Substrats und
b) Nachbehandlung der Substratoberfläche mit einem Plasmabrenner und
c) Wärmebehandlung bei einer Temperatur im Bereich von 600 °C bis 950 °C zu einem späteren Zeitpunkt,
d) Abkühlen des behandelten Substrats auf eine Temperatur im Bereich von 200 °C bis Raumtemperatur und
e) Reinigen des Substrats durch Polieren oder Waschen der Oberfläche,
wobei die Behandlungslösung mit einer Konzentration in einer Menge von 0,1 bis 200 g/m² durch Sprühen oder Dampfzerstäubung aufgetragen wird und keine diskreten zusätzlichen Schichten auf der Oberfläche des behandelten Substrats gebildet werden.

3. Verfahren nach einem der Ansprüche 1 oder 2,
**dadurch gekennzeichnet, dass**
das Substrat durch Waschen oder Behandlung mit einem Plasmabrenner gereinigt wird, bevor die eine Verbindung oder die mehreren Verbindungen, die geeignet ist/sind, pyrolytisch mit dem Substrat umgesetzt zu werden, aufgebracht wird/werden.

4. Verfahren nach einem der Ansprüche 1 bis 3,
**dadurch gekennzeichnet, dass**
wenigstens ein weiteres Metall und/oder Bor auf die Oberfläche des zu behandelnden Substrats in Form einer Verbindung aufgebracht wird, die pyrolytisch mit dem Substrat in dem angegebenen Temperaturbereich umgesetzt werden kann.

5. Verfahren nach einem der vorhergehenden Ansprüche,
**dadurch gekennzeichnet, dass**
das wenigstens eine weitere Metall ausgewählt ist aus der Gruppe von Schmelzphasenbildnern und/oder der Gruppe von Netzwerkbildner oder Funktionalisierern.

6. Verfahren nach Anspruch 5,
**dadurch gekennzeichnet, dass**
die Gruppe von Schmelzphasenbildnern Li, K, Cu, Zn und Sn und die Gruppe von Netzwerkbildner oder Funktionalisierern Ti, V, Fe, Cu, Ge, Ag, In, Sn, W, Pt und Pb umfasst.

7. Verfahren nach einem der vorhergehenden Ansprüche,
**dadurch gekennzeichnet, dass**
das Substrat eine Platte oder Floatglas ist.

8. Verfahren nach einem der vorhergehenden Ansprüche,
**dadurch gekennzeichnet, dass**
das Aufbringen on-line im Herstellungsverfahren stattfindet, wenn die Platte oder das Floatglas hinreichend abgekühlt ist.

9. Verfahren nach einem der Ansprüche 1 bis 8,
**dadurch gekennzeichnet, dass**
die Wärmebehandlung von einem schnellen Abkühlen gefolgt wird, um ein Einscheiben-Sicherheitsglas herzustellen oder die Herstellung eines laminierten Sicherheitsglases.

10. Platte oder Floatglas, erhältlich durch das Verfahren nach einem der vorhergehenden Ansprüche, wobei keine diskreten zusätzlichen Schichten auf der Oberfläche des behandelten Substrats gebildet werden.

## Revendications

1. Procédé de traitement d'un substrat en verre ou d'un substrat vitreux à base de SiO₂, comprenant les étapes suivantes :
a) application d'une solution de traitement contenant un composé ou plusieurs composés du groupe comprenant Al, Zr et Ti, qui peuvent réagir par voie pyrolytique à une température comprise dans une plage de 600°C à 950°C, sur la surface du substrat à traiter et réaction pyrolytique de celui-ci à la température spécifiée, et
b) refroidissement du substrat traité à une température dans une plage comprise entre 200°C et la température ambiante,
***caractérisé par***
c) le nettoyage du substrat par polissage ou lavage de la surface, et
***en ce que*** la solution de traitement est appliquée avec une concentration de 0,1 à 200 g/m² par pulvérisation ou atomisation à la vapeur, et aucune couche discrète supplémentaire n'est formée à la surface du substrat traité.

2. Procédé de traitement d'un substrat en verre ou d'un substrat vitreux à base de SiO₂, comprenant les étapes suivantes :
a) application d'une solution de traitement contenant un composé ou plusieurs composés du groupe comprenant Al, Zr et Ti, pouvant réagir par voie pyrolytique à une température comprise dans une plage de 600°C à 950°C, sur la surface du substrat à traiter, et
b) post traitement de la surface du substrat avec une torche à plasma, et
c) traitement thermique à une température dans une plage comprise entre 600°C et 950°C à un moment ultérieur,
d) refroidissement du substrat traité à une température dans une plage comprise entre 200°C et la température ambiante,
et
e) nettoyage du substrat par polissage ou lavage de la surface,
dans lequel la solution de traitement est appliquée avec une concentration de 0,1 à 200 g/m² par pulvérisation ou atomisation à la vapeur, et aucune couche discrète supplémentaire n'est formée à la surface du substrat traité.

3. Procédé selon l'une quelconque des revendications 1 à 2,
***caractérisé en ce que***
le substrat est nettoyé par lavage ou traitement avec une torche à plasma avant l'application du composé ou des composés aptes à réagir par voie pyrolytique avec le substrat.

4. Procédé selon l'une quelconque des revendications 1 à 3,
***caractérisé en ce que***
au moins un autre métal et/ou du bore est/sont appliqué(s) sur la surface du substrat à traiter sous forme d'un composé qui peut réagir par voie pyrolytique avec le substrat dans la plage de températures spécifiée.

5. Procédé selon l'une quelconque des revendications précédentes,
***caractérisé en ce que***
ledit au moins un autre métal est choisi dans le groupe des agents de formation en phase fondue et/ou le groupe des agents de formation de réseau ou des agents de fonctionnalisation.

6. Procédé selon la revendication 5,
***caractérisé en ce que***
le groupe des agents de formation en phase fondue comprend Li, K, Cu, Zn et Sn, et le groupe des agents de formation de réseau ou des agents de fonctionnalisation comprend Ti, V, Fe, Cu, Ge, Ag, In, Sn, W, Pt et Pb.

7. Procédé selon l'une quelconque des revendications précédentes,
***caractérisé en ce que***
le substrat est du verre plat ou flotté.

8. Procédé selon l'une quelconque des revendications précédentes,
***caractérisé en ce que***
l'application se fait « on-line » dans le processus de fabrication, lorsque le verre en plaque ou flotté est suffisamment refroidi.

9. Procédé selon l'une quelconque des revendications 1 à 8,
***caractérisé en ce que***
le traitement thermique est suivi d'un refroidissement rapide pour produire un verre de sécurité trempé ou pour la production d'un verre de sécurité feuilleté.

10. Verre en plaque ou flotté, pouvant être obtenu par un procédé selon l'une quelconque des revendications précédentes, dans lequel aucune couche supplémentaire discrète n'est formée sur la surface du substrat traité.
